# EUROPEAN PATENT SPECIFICATION

(11) **EP 2 958 646 B1**
(45) Date of publication and mention of the grant of the patent: **05.12.2018**
(21) Application number: 14754630.3
(22) Date of filing: 21.02.2014
(51) Int. Cl.: A63D 9/00

(54) **METHOD FOR MANUFACTURING BOWLING PIN WITH ADJUSTABLE PROPERTIES, AND PIN**
VERFAHREN ZUR HERSTELLUNG EINES BOWLINGKEGELS MIT EINSTELLBAREN EIGENSCHAFTEN UND KEGEL
PROCÉDÉ DE FABRICATION DE QUILLE AUX PROPRIÉTÉS RÉGLABLES, ET QUILLE

(30) Priority: 22.02.2013 FI 20135171
(43) Date of publication of application: 30.12.2015
(73) Proprietor: Rinotop Oy, 01800 Klaukkala (FI)
(72) Inventor: KERBS, Kaj, FI-01800 Klaukkala (FI); KANNISTO, Kari, FI-01800 Klaukkala (FI); MAJA, Juha, FI-01800 Klaukkala (FI)
(74) Representative: Kolster Oy Ab
(86) International application number: PCT/FI2014/050137
(87) International publication number: WO 2014/128359

(56) References cited:
- EP-A1- 1 913 985
- EP-A1- 1 913 985
- CN-A- 101 437 670
- GB-A- 931 709
- GB-A- 1 115 331
- SE-C- 191 848
- US-A- 532 871
- US-A- 532 871
- US-A- 3 025 061
- US-A- 3 224 769
- US-A- 4 210 992

## Description

### Background

The invention relates to a bowling pin the mass, centre of gravity, and/or moments of inertia may be changed and/or adjusted at the stage of manufacturing or assembling the pin, and/or after its assembly.

Ten-pin bowling is a most popular sport and hobby around the world. The pins used in ten-pin bowling have traditionally been made from wood that is coated with plastic. Equipment used in competition ten-pin bowling must meet the regulations set by the USBC (United States Bowling Congress).

The problem in ten-pin bowling is that the level of results of the bowling performance has risen. EP1913985 discloses a bowling pin including a hollow area and a longitudinal axis of the hollow area extends generally perpendicularly to a substantially planar bottom surface of the base. A neck insert may be arranged in the hollow area. US532871 discloses a bowling pin composed of two sections. A socket has been created in the pin, and a weight has been located in the socket.

### Brief description

The invention provides a method for manufacturing a bowling pin as set out in claim 1. Further embodiments are set out in the dependent claims.

The idea is that by changing the mass, centre of gravity, and/or moments of inertia it is possible to adjust the difficulty/ease of how a pin falls, and consequently the results level of bowling may be changed to the desired level. A benefit is that changing or adjusting the pin is advantageous compared with changing bowling alleys or bowling balls.

According to an idea, the method for manufacturing a pin is characterised in that the pin is manufactured out of two or more pieces, and by shaping the inner parts of the pin and/or by mass pieces installed in the pin, the centre of gravity and/or moments of inertia and/or mass of the pin may be changed. An advantage is, for example, that the properties of a pin may be accurately determined as early as the manufacturing stage of the pin.

The idea of an embodiment is that adjusting means of the mass piece are arranged in the pin so that the location of the mass piece in relation to the body of the pin may be adjusted from the outside of the pin. A benefit is that the centre of gravity and/or moment of inertia may be changed when the pin is already being used in bowling alleys.

### Brief description of the figures

The matter is now described in closer detail in connection with preferred embodiments and with reference to the accompanying drawings, in which
Figure 1 shows schematically a method for manufacturing a bowling pin,
Figure 2 is a schematic perspective and cross-sectional view of a pin,
Figure 3a is a schematic side and cross-sectional view of another pin,
Figure 3b is a schematic side and cross-sectional view of a third pin,
Figure 4a is a schematic side and cross-sectional view of a fourth pin,
Figure 4b is a schematic side and cross-sectional view of a fifth pin,
Figure 5 is a schematic side and cross-sectional view of a fifth pin,
Figure 6 is a schematic side and cross-sectional view of a sixth pin.

For the sake of clarity, the figures show the matter in a simplified manner. In the figures, like reference numerals identify like elements.

### Detailed description

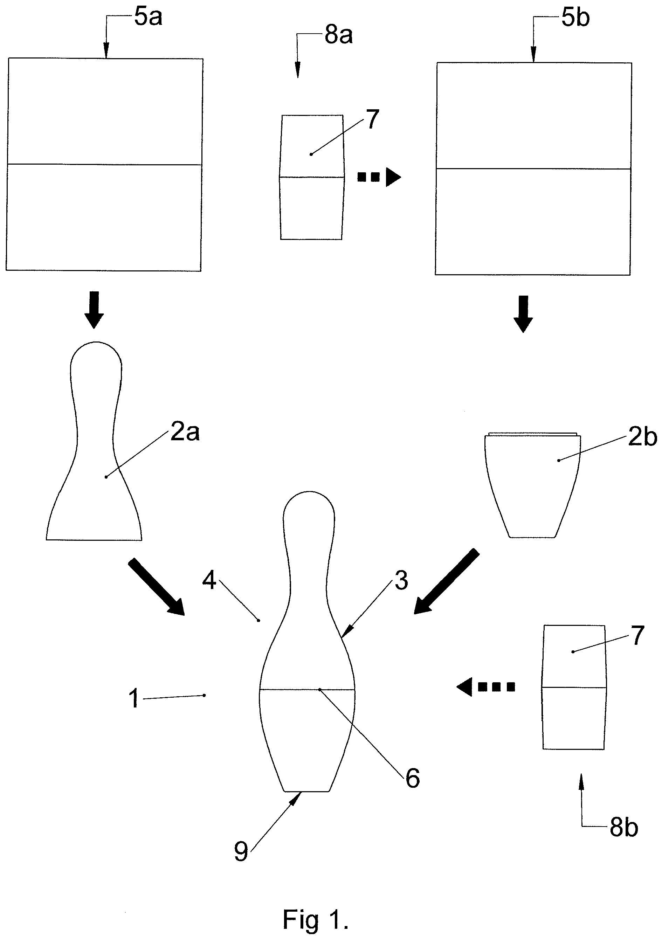

Figure 1 is a schematic presentation of a method for manufacturing a bowling pin. It is to be noted that the concept "pin" in the present description refers to a pin used in ten-pin bowling. According to an idea, the pin may meet the rules and regulation set by the USBC. According to another idea, the pin may differ from said rules and regulations, but is used in bowling.

In the method, the pin body 1 is manufactured by injection moulding two body parts 2a, 2b of the pin. A first part 2a of the body is injection-moulded in a first mould 5a and, correspondingly, a second part 2b in a second mould 5b. It is to be noted in this connection that the pin body 1 may be formed of a single part or of even more than two body parts.

The injection moulds 5a, 5b may be implemented in manners of implementation of injection moulds known per se. They may comprise, for example, cores or the like.

Said body parts 2a, 2b, once fastened together, may form an outer surface 3 of a pin-shaped body and an interior 4 within the body.

The material used for the body parts 2a, 2b may be plastic or a mixture comprising plastic. According to an idea, the plastic comprises a thermoplast, which is e.g. polyolefin, such as polyethene PE or polypropylene PP, or another thermoplast, such as polyoxymethylene POM, polystyrene PS, acryl-butadiene-styrene ABS or polyamide PA, etc. Typical advantages of a thermoplast include weldability and easy processibility.

According to an idea, the mixture comprising plastic contains natural fibre, e.g. wood fibre, which is most preferably made of hardwood which is typically light in colour and therefore advantageous to apply a colour to, if so desired. The natural fibre may alos comprise softwood fibre, flax fibre, hemp fibre, etc. The share of natural fibre of the mixture is advantageously 5 - 60 percent by weight, or even more advantageously 10 - 30 percent by weight.

An advantage of plastic filled with natural fibre is, among other things, its low tendency to form suction while the mixture is cooling down. Owing to this property, the surfaces of the body part 2a, 2b of the pin can be provided with high quality even though the wall thickness of the piece were great. A further advantage is good impact resistance, which makes the life of the pin long. A still further advantage is the option to adjust the properties of the material, such as the elastic modulus (E-modulus), for example. A still further advantage is that natural fibre brings the properties of the pin closer to those of a pin made of wood. Consequently, the properties of the pin closely resemble a wooden pin. Consequently, it is quite simple to manufacture pins that for instance meet the requirements set by the USBC from the material. It is, of course, also possible to manufacture pins of another kind, i.e. pins that are not in accordance with the standards set by the USBC.

By using natural fibre, it is also possible to replace a plastic material, which reduces the raw material costs of the pin.

According to another idea, the plastic comprises a thermosetting plastic, e.g. polyurethane PU. The thermosetting plastic may be filled with natural fibre as already disclosed above. Typically, the advantage of a thermosetting plastic is good resistance to impact and wear.

According to an idea, the body 1 of the pin is manufactured from wood. The manufacturing method may in such a case comprise machining a wooden preform straight into a pin-shaped body 1 by lathing, for example, or manufacturing two or more body parts 2a, 2b separately, which when joined together form the pin body 1. No matter which the manufacturing method of a wooden pin is, the method also comprises the forming of an interior 4. The interior 4 may be formed of shapes formed in the body parts 2a, 2b to be joined, or it may be shaped in the pin-shaped body by milling and/or drilling through a base 9 of the pin, for example.

The material for manufacturing the body parts 2a, 2b may naturally contain other components, such as mineral fillers, colouring agents, injection moulding additives, such as release agents, etc.

One body part 2a, 2b may be made of a different material than the other part 2a, 2b: the materials may e.g. have a different density or the like.

In Figure 1, the body parts 2a, 2b to be manufactured are shaped such that the division plane 6 between them is horizontal with respect to the complete pin body 1. The first part 2a forms the upper part of the pin body 1 while the second part 2b forms the lower part of the pin body 1. It is also possible to shape the parts 2a, 2b and arrange the division plane 6 in a different manner. Further below in this description, a solution is disclosed wherein the division plane is vertical; in addition, the division plane 6 may be arranged obliquely with respect to the horizontal and vertical direction, or it may comprise parts that are arranged in mutually parallel or mutually intersecting space planes. For instance, the division plane 6 may be provided with a tongue-and-groove joint, or other corresponding shapes which contribute to the attachment between the body parts 2a, 2b.

In addition to the body parts 2a, 2b, the method may comprise manufacturing one or more mass pieces 7.

The mass piece 7 is manufactured from the materials used in the manufacture of the body parts.

The mass piece 7 may be manufactured e.g. by injection moulding, pressing or some other manufacturing method known per se. The mass piece 7 may have a solid, hollow, or angular structure.

Figure 1 shows two alternative ways to arrange a mass piece 7 in a pin: in the first method alternative 8a, the mass piece 7 is arranged in a mould 5b prior to injecting a mixture forming a body part into said mould 5b. Of course, the mass piece may be arranged in a first mould 5a or mass pieces may be arranged in both moulds.

In the second method alternative 8b, the mass piece 7 is arranged in a body interior 4. This arranging may be carried out either prior to attaching the body parts 2a, 2b to one another, or only after said attachment to one another has been performed. In the latter embodiment, the outer surface 3 of the body of the pin comprises an opening via which the mass piece may be arranged in the interior 4. The opening may be arranged in the base 9 of the pin, for instance.

By means of the mass piece 7, the vertical radius of gyration RG_{V} and the vertical moment of inertia MOI_{V} corresponding to it, as well as the horizontal radius of gyration RG_{H} and the horizontal moment of inertia MOI_{H} corresponding to it, of the pin 1 can be set as desired.

The centre of gyration of RG_{V} is parallel to the vertical axis of revolution as the pin is standing in its vertical position on a horizontal plane and passes through the centre of gravity of the pin.

The centre of gyration of RG_{H} is parallel to the axis of revolution on a horizontal plane as the pin is standing in the normal manner in its vertical position on a horizontal plane, and passes through the centre of gravity of the pin.

According to USBC, the concepts radius of gyration, RG, and moment of inertia, MOI, refer to the following:

*"Radius of gyration, RG: Measured in inches, radius of gyration is the distance from the axis of rotation at which the total mass of a body might be concentrated without changing its moment of inertia.*

*Moment of Inertia, MOI: Resistance to change in rotation."*

The USBC standard only deals with horizontal values, that is, it only recognizes RG_{H} and MOI_{H} as the factors affecting the properties of a pin.

RG_{V}, MOI_{V}, RG_{H} and MOI_{H} are of utmost importance from the point of view of the behaviour of the pin during actual bowling. However, the importance of RG_{V} and MOI_{V}, in particular, on the pin behaviour has not so far been recognized.

The larger the RG or MOI of the pin, the more force the pin requires to start rotating. In addition, the small friction between the alley and the pin base as well as between the bowling ball and the pin obviously makes it harder for the pin to fall and consequently lowers the results level.

In addition, according to an idea, the mass piece 7 may be used to adjust the mass of the pin and the location of the centre of gravity. The lower the centre of the gravity of the pin is, the harder the pin is to knock down.

The total mass of the pin also plays a major role in the behaviour of the pin. It is more difficult to make a heavier pin fall than a lighter pin. It is particularly difficult to knock down make a pin which has a large RG_{V} and MOI_{V}, which is heavy, and which has its centre of gravity as low as possible.

By using variations of the mass, shape, and position of the mass piece 7, it is possible on the one hand to manufacture pins that contribute to providing a beginner-level bowler with a pleasant bowling experience, and on the other hand pins that require top-level know-how and experience to fall.

The body parts 2a, 2b may be attached to one another in numerous ways. They may for instance be glued or welded together, or a mechanical fastening, e.g. a crimp connection or a threaded connection, or various combinations thereof, may be used.

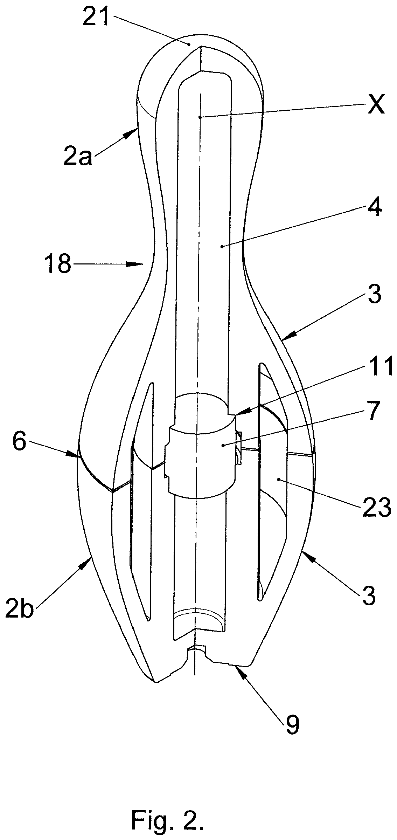

Figure 2 is a schematic perspective and cross-sectional view of a pin. The pin in question may be manufactured by the method according to Figure 1, for example.

The body parts 2a, 2b are preferably manufactured so that the division plane 6 between them resides higher or lower than the impact plane of a bowling ball. Thus, the impacts of the bowling ball are not directly applied to the joint in the division plane 6. The division plane 6 may, of course, also be arranged in the impact plane of the bowling ball.

The pin comprises an interior 4 which is closed, in other words, has no link to the outer surface 3 of the pin, not even the base 9. The internal shapes of the body parts 2a, 2b needed to form the interior 4 may be manufactured in moulds with the aid of a moving core, for example. In the embodiment shown in Figure 2, the interior 4 has the shape of an annular cylinder extending from about the pin base 9, pass the pin neck 18, close to the pin top 21.

It should be noted in this context that the interior may alternatively have the shape of another cylinder than an annular cylinder. Its shape may also be conical, ellipsoid, or similar. According to an idea, all of the interior 4 is arranged below the pin neck 18. This way, it is possible to avoid weakening the structure of the thinnest part of the pin.

In addition to the interior 4, a pin may also have other hollow parts, such as the hollow space 23 surrounding the interior 4 in the pin of Figure 2. The hollow space 23 may decrease the pin mass and affect the behaviour of the pin in a bowling event. Filling material may be arranged in the hollow space 23, if so desired.

The mass piece 7 is arranged in the interior 4, which may be provided with fit forms 11 to keep the mass pieces 7 in place. In such a case, the mass piece 7 has a cylindrical external form.

The mass piece 7 is part of the fastening system of the body parts 2a, 2b. It may e.g. be glued to the body parts 2a, 2b and/or it may comprise forms so as to provide form locking or a crimp connection with the body parts 2a, 2b.

The body parts 2a, 2b may be connected to each other by welding or gluing, for example.

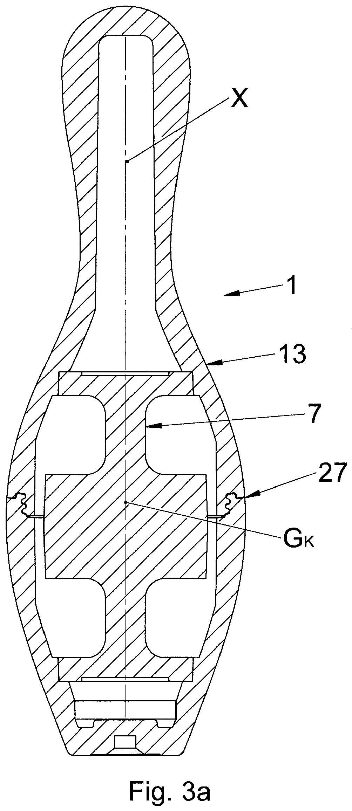

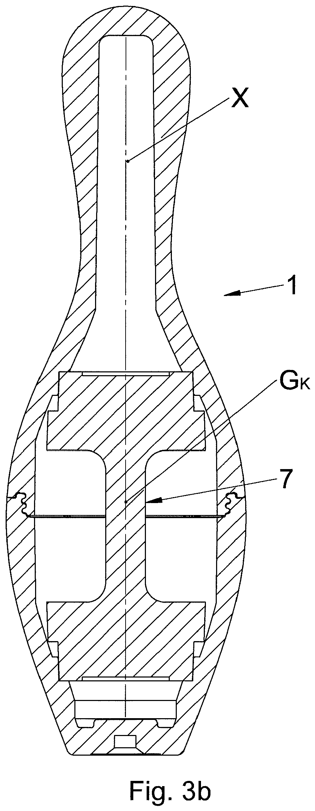

Figure 3a is a schematic view of another pin, and Figure 3b is a sectioned side view of a third pin.

The pin body 1 comprises two body parts 2a, 2b whose division plane 6 is horizontal with respect to a finished pin. The parts 2a, 2b are interconnected in the division place 6 by a threaded joint 27. In this, glue, a welded seam, or another similar element improving the adhesion may be added.

The interconnected body parts 2a, 2b form the interior 4, which is concentric with respect to the vertical centre axis of the pin, and which has a shape that essentially adapts to the external form of the pin. Consequently, the wall thicknesses of the body parts 2a, 2b are essentially the same throughout the entire pin.

In the interior 4, a mass piece 7 has been arranged, which is mounted by its ends to the body parts 2a, 2b. This way, the mass piece 7 may act as the connecting piece that connects the body parts 2a, 2b to one another.

The mass of the mass piece 7 is located very close to the centre of gravity Gₖ of the pin, directly around it. This allows the moment of inertia for the pin to fall, that is, MOI_{H}, to be small whereby the pin 1 falls more easily than the pin shown in Figure 3b, for example.

The RG_{H} and MOI_{H} of the pin 1 shown in Figure 3b are substantially larger than those of the pin of Figure 3a. This has been achieved with the mass piece 7 whose mass is placed as far as possible from the centre of gravity Gₖ of the pin, as seen in the vertical direction. The bulk of the mass is arranged right at the ends of the mass piece.

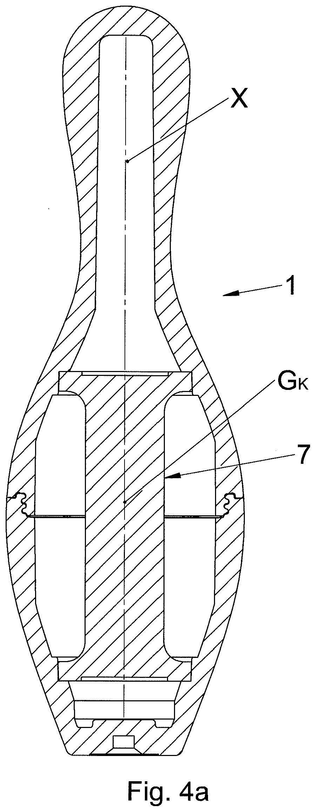

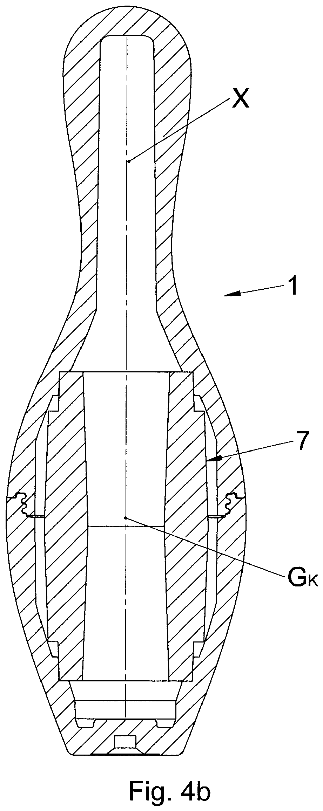

Figure 4a is a schematic view of a fourth pin, and Figure 4b is a sectioned side view of a fifth pin. The parts 2a, 2b forming the body of the pin 1 may have the exact same dimensions, masses, and other properties as those presented in the pins of Figures 3a, 3b. Instead, there is a difference in the mass pieces 7, this difference causing the pins 1 shown in Figures 3a, 3b, 4a, 4b to behave essentially differently with respect to each other during bowling.

The bulk of the mass in the mass piece 7 of the pin 1 shown in Figure 4a is arranged close to the vertical centre axis X of the pin 1, but essentially equally along the length of the mass piece 7. Such a mass piece 7 provides the pin with a small moment of inertia for the rotation motion whose centre of gyration is the vertical centre axis X, that is, the RG_{V} and MOI_{V} of the pin are small.

In Figure 4b, the bulk of the mass in the mass piece 7 is arranged as far from the vertical centre axis X of the pin 1 as possible, but essentially equally along the length of the mass piece 7. Such a mass piece 7 provides a pin with a large moment of inertia for the rotation whose centre of gyration is the vertical centre axis X, that is, the RG_{V} and MOI_{V} of the pin are large.

The dimensions of the mass pieces 7 of Figures 3a, 3b, 4a, 4b are in the most advantageous case congruent in the places where they are connected to the parts 2a, 2b. Thanks to this, it is possible to manufacture standard-form pin body parts 2a, 2b, no matter which mass piece 7 shown in Figures 3a, 3b, 4a, 4b is mounted to them. It is obviously clear that several, different kinds of mass pieces 7 with different mass distributions can be manufactured, enabling several variations for MOI_{H} and MOI_{V} of the pin 1.

The mass pieces 7 of Figures 3a, 3b, 4a, 4b may be rotationally symmetrical pieces with respect to the vertical centre axis X, but alternatively at least somewhat asymmetric up to the point where the asymmetrical distribution of mass affects the rotation of the pin. In such a case, the rotating motion of the pin is varying and unstable. In addition, the mass of the mass piece 7 may be asymmetrically distributed in the direction of the centre axis X of the pin: for example, the mass concentrations at the ends of the mass piece 7 of Figure 3b can therefore be not only equal in mass but also unequal.

The pins 1 of Figures 3a, 3b, 4a, 4b can be equal as regards their other properties, in other words, their mass, location of the centre of gravity etc. can be mutually identical. This makes it possible to manufacture a plurality of pin versions having different properties in a very simple manner.

The outer surface 3 of the pin body 1 may be coated with a coating layer 13, which may consist e.g. of a thermoplastic or a thermosetting plastic, such as that produced by the product name Surlyn. The material constituting the coating layer may comprise a colouring agent. Typically, a pin is white in colour, but this is not the only colour alternative for a pin. The outer surface 3 may be of one or more colours. The colouring agent may comprise components which, upon exposure to UV light, produce a certain visual effect. Such an effect may be particularly attractive in glow bowling. According to an idea, the coating layer may comprise soil repellent, e.g. photoactive, components.

The coating layer 13 may have a constant thickness or it may have areas of different thicknesses. According to an idea, within the area of the impact point of the bowling ball the coating layer 13 is thicker than elsewhere. The coating layer 13 may be made of the same material throughout, or of a different material in different parts of the pin. The coating layer 13 may comprise one or more layers of different material. The purpose of the coating layer 13 may be e.g. to influence the appearance of the pin, protect the body of the pin, and/or affect the frictional properties of the outer surface of the pin. The coating layer 13 and/or the outer surface 3 of the body of the pin may comprise patterns, recesses, protrusions, etc.

The coating is naturally applicable to the other embodiments disclosed in this description.

The base 9 of the pin may also be provided with different patterns or different coatings in order to change the friction between the base and a bowling lane. The patterns of the base 9 are also applicable to the other pin embodiments disclosed in this description.

The pins shown in Figures 3a - 4b are manufactured without a separate base ring. This makes the manufacturing process of the pin simpler. Of course, a separate base ring may also be used in the pins in question.

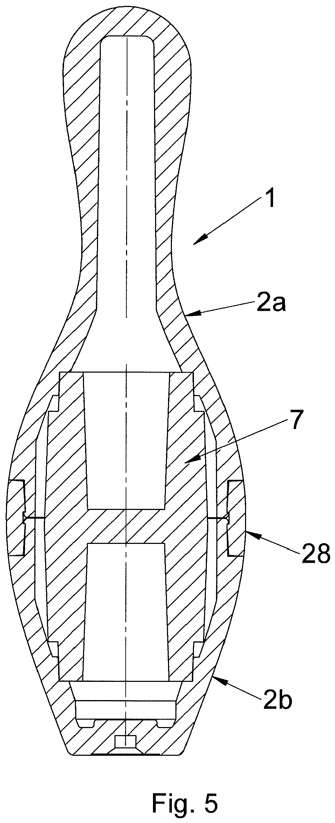

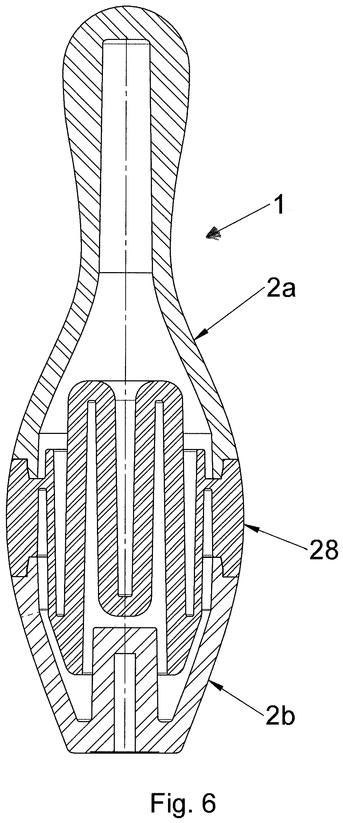

Figure 5 is a schematic view of a fifth pin, and Figure 6 is a sectioned side view of a sixth pin. The most essential difference of these pins to the ones presented in the previous drawing is that the pin body comprises a third part 28, arranged between the first and second part 2a, 2b. Features of the mass piece 7 have already been described in the above.

The third part 28 shown in Figure 5 is a ring, which is arranged in the division plane 6 between the first and second part 2a, 2b. The third part 28 enforces the joint between the first and second part 2a, 2b. The third part 28 may be manufactured from the aforementioned production materials of parts 2a, 2b, and it can be mounted in the pin 1 in ways that were already referred to in the above. The third part 28 may be manufactured by injection moulding or by detaching it from a tube made of a suitable material.

In the pin 1 shown in Figure 6, the third part 28 is incorporated into the mass piece 7. This way the number of parts in the pin 1 may be reduced.

The third part 28 is advantageously manufactured of a particularly strong material that enforces the point of impact, that is, the point that the bowling ball hits as it meets a pin 1 standing upright.

The aforementioned pin 1 parts: body parts 2a, 2b, mass piece 7 and the third part 28 may be manufactured of masses having different specific gravities. The body parts 2a, 2b may, for example, be manufactured of a material with a lighter specific gravity than the mass piece. The variations in material selection add to the options of adjusting the pin mass, centre of gravity as well as radius of gyration and moment of inertia without the need to manufacture a plurality of moulds for the various parts of a pin.

In summary, the method of the invention is characterised by: manufacturing at least one mass piece, and arranging said mass piece in a pin body to adjust the radius of gyration and/or moment of inertia of the pin.

In some cases, features disclosed in this application may be used as such, regardless of other features. On the other hand, when necessary, features disclosed in this application may be combined in order to provide different combinations.

The drawings and the related description are only intended to illustrate the idea of the invention. It is apparent to a person skilled in the art that the invention is not restricted to the embodiments described above, in which the invention is described by means of some examples, but many modifications and different embodiments of the invention are possible within the scope of the inventive idea defined in the following claims.

### Reference numerals

- 1: pin
- 2a, b: part of pin body
- 3: outer surface of body
- 4: interior
- 5a, b: mould
- 6: division plane
- 7: mass piece
- 8a, b: method alternative
- 9: base of pin
- 10: tongue-and-groove joint
- 11: fit form
- 12: groove of mass piece
- 13: covering layer
- 16: first threaded part
- 17: second threaded part
- 18: neck of pin
- 19: mating base
- 20: opening of interior
- 21: tip of pin
- 22: handle
- 23: hollow space
- 24: flange-like protrusion
- 25: scale
- 26: locking means
- 27: threaded joint
- 28: third part

- G_{K}: centre of gravity of pin
- G_{M}: centre of gravity of mass piece
- H_{K}: height of centre of gravity of pin
- H_{M}: height of centre of gravity of mass piece
- X: vertical centre axis

## Claims

1. A method for manufacturing a bowling pin, **characterised by**:
manufacturing at least two body parts (2a, 2b) which, when fastened together, form a pin-shaped outer surface (3) of the body and the interior (4) inside of the body,manufacturing at least one mass piece (7) from the materials used in the manufacture of the body parts,
arranging said mass piece (7) in the body of the pin in order to adjust the vertical radius of gyration (RG_{V}) and/or the vertical moment of inertia (MOI_{V}) of the pin (1), and
using the mass piece (7) for attaching the body parts (2a, 2b) to each other

2. A method as claimed in claim 1, **characterised by** adjusting, by the use of said mass piece (7), also the horizontal radius of gyration (RG_{H}) and/or the horizontal moment of inertia (MOI_{H}) of the pin.

3. A method as claimed in claim 1 or 2, **characterised in that** the mass piece (7) is manufactured asymmetric so that the radius of gyration (RG_{H}, RG_{V}) and/or moment of inertia (MOI_{H}, MOI_{V}) of the pin may be adjusted by the position of the mass piece (7) in relation to the body (1) of the pin.

4. A method as claimed in any of the previous claims, **chara**c**terised** in that an interior (4) is made in the body (1) of the pin to accept the mass piece (7), and the mass piece (7) is arranged in said interior (4).

5. A method as claimed in claim 4, **characterised by** manufacturing, in the pin body (1), a standard-form interior (4) to accept the mass piece (7), by manufacturing a set of mass pieces (7) that fit the standard form of the interior, and by arranging, in the interior, a mass piece (7) that sets the radius of gyration (RG_{H}, RG_{V}) and moment of inertia (MOI_{H}, MOI_{V}) of the pin (1) to what is desired.

6. A method as claimed in any one of the preceding claims, **characterised in that** the pin body (1) is made partly or entirely of plastic or a mixture comprising plastic.

7. A method as claimed in claim 6, **characterised by** manufacturing the pin body (1) by injection-moulding so that said mass piece (7) is arranged in a mould (5a, 5b) forming the body (1) or a part (2a, 2b) thereof before plastic or the mixture comprising plastic is injected in said mould (5a, 5b).

8. A method as claimed in claim 6 or 7, **characterised in that** the mixture comprising plastic contains natural fibre, preferably wood fibre, most preferably hardwood fibre.

9. A method as claimed in any one of claims 1 - 5, **characterised by** manufacturing the pin body (1) partly or entirely of wood.

10. A method as claimed in any one of claims 4 - 9, **characterised by** manufacturing the interior (4) at a distance from the base (9) of the pin.

11. A method as claimed in any one of claims 4 - 10, **characterised by** arranging all of the interior (4) below the neck (18) of the pin.

## Patentansprüche

1. Verfahren zur Herstellung eines Bowlingkegels, **gekennzeichnet durch:**
Herstellen mindestens zweier Körperteile (2a, 2b), die, wenn sie aneinander befestigt sind,
eine kegelförmige Außenfläche (3) des Körpers und das Innere (4) im Inneren des Körpers bilden, Herstellen mindestens eines Massestücks (7) aus den Materialien, die zur Herstellung der Körperteile verwendet werden,
Anordnen des Massestücks (7) in dem Körper des Kegels zur Einstellung des vertikalen Trägheitsradius (RGᵥ) und/oder des vertikalen Trägheitsmoments (MOIᵥ) des Kegels (1), und
Verwenden des Massenstücks (7), um die Körperteile (2a, 2b) aneinander zu befestigen.

2. Verfahren nach Anspruch 1, **gekennzeichnet durch** Einstellen auch des horizontalen Trägheitsradius (RG_{H}) und/oder des horizontalen Trägheitsmoments (MOI_{H}) des Kegels durch die Verwendung des Massestücks (7).

3. Verfahren nach Anspruch 1 oder 2, **dadurch gekennzeichnet, dass** das Massestück (7) asymmetrisch derart hergestellt wird, dass der Trägheitsradius (RG_{H}, RGᵥ) und/oder das Trägheitsmoment (MOI_{H}, MOIᵥ) des Kegels durch die Position des Massestücks (7) in Bezug zu dem Körper (1) des Kegels einstellbar sind.

4. Verfahren nach einem der vorhergehenden Ansprüche, **dadurch gekennzeichnet, dass** ein Inneres (4) in dem Körper (1) des Kegels derart hergestellt wird, dass es das Massestück (7) aufnimmt, und das Massestück (7) in dem Inneren (4) angeordnet wird.

5. Verfahren nach Anspruch 4, **gekennzeichnet durch** Herstellen, in dem Kegelkörper (1), eines Inneren mit Standardform (4) zur Aufnahme des Massestücks (7) **durch** Herstellen einer Gruppe aus Massestücken (7), die in die Standardform des Inneren passen, und **durch** Anordnen eines Massestücks (7) in dem Inneren, das den Trägheitsradius (RG_{H}, RGᵥ) und das Trägheitsmoment (MOI_{H}, MOIᵥ) des Kegels (1) auf die Sollwerte einstellt.

6. Verfahren nach einem der vorhergehenden Ansprüche, **dadurch gekennzeichnet, dass** der Kegelkörper (1) teilweise oder vollständig aus Kunststoff oder einer Mischung, die Kunststoff enthält, hergestellt wird.

7. Verfahren nach Anspruch 6, **gekennzeichnet durch** Herstellen des Kegelkörpers (1) durch Spritzguss derart, dass das Massestück (7) in eine Form (5a, 5b) eingelegt wird, die den Körper (1) oder einen Teil (2a, 2b) davon formt, bevor Kunststoff oder die Mischung, die Kunststoff enthält, in die Form (5a, 5b) eingespritzt wird.

8. Verfahren nach Anspruch 6 oder 7, **dadurch gekennzeichnet, dass** die Mischung, die Kunststoff enthält, natürliche Fasern, vorzugsweise Holzfasern, höchst bevorzugt Hartholzfasern, enthält.

9. Verfahren nach einem der Ansprüche 1-5, **gekennzeichnet durch** Herstellen des Kegelkörpers (1) teilweise oder vollständig aus Holz.

10. Verfahren nach einem der Ansprüche 4-9, **dadurch gekennzeichnet, dass** das Innere (4) mit einem Abstand zu der Basis (9) des Kegels hergestellt wird.

11. Verfahren nach einem der Ansprüche 4-10, **dadurch gekennzeichnet, dass** das gesamte Innere (4) unter dem Hals (18) des Kegels angeordnet wird.

## Revendications

1. Procédé de fabrication d'une quille de bowling, **caractérisé par** :
la fabrication d'au moins deux parties de corps (2a, 2b) qui, lorsqu'elles sont fixées ensemble, forment une surface externe en forme de quille (3) du corps et l'intérieur (4) dans le corps, la fabrication d'au moins une pièce de masse (7) à partir de matériaux utilisés dans la fabrication des parties de corps,
la mise en place de ladite pièce de masse (7) dans le corps de la quille afin d'ajuster le rayon vertical de giration (RGᵥ) et/ou le moment vertical d'inertie (MOIᵥ) de la quille (1), et
l'utilisation de la pièce de masse (7) pour fixer les parties de corps (2a, 2b) l'une à l'autre.

2. Procédé tel que revendiqué selon la revendication 1, **caractérisé par** l'ajustement, par l'utilisation de ladite pièce de masse (7), également du rayon horizontal de la giration (RG_{H}) et/ou du moment horizontal de l'inertie (MOI_{H}) de la quille.

3. Procédé tel que revendiqué selon la revendication 1 ou 2, **caractérisé en ce que** la pièce de masse (7) est fabriquée asymétrique afin de pouvoir ajuster le rayon de giration (RG_{H}, RG_{V}) et/ou le moment d'inertie (MOI_{H}, MOI_{V}) de la quille selon la position de la pièce de masse (7) relativement au corps (1) de la quille.

4. Procédé tel que revendiqué selon l'une quelconque des revendications précédentes, **caractérisé en ce qu'**un intérieur (4) est constitué dans le corps (1) de la quille pour accepter la pièce de masse (7), et que la pièce de masse (7) est disposée dans ledit intérieur (4).

5. Procédé tel que revendiqué selon la revendication 4, **caractérisé par** la fabrication, dans le corps de quille (1), d'un intérieur de forme standard (4) pour accepter la pièce de masse (7), par la fabrication d'un ensemble de pièces de masse (7) qui s'ajustent à la forme standard de l'intérieur, et par la mise en place, dans l'intérieur, d'une pièce de masse (7) qui définit le rayon de la giration (RG_{H}, RG_{V}) et le moment de l'inertie (MOI_{H}, MOI_{V}) de la quille (1) à ce qui est souhaité.

6. Procédé tel que revendiqué selon l'une quelconque des revendications précédentes, **caractérisé en ce que** le corps de quille (1) est constitué partiellement ou entièrement de matière plastique ou d'un mélange comprenant du plastique.

7. Procédé tel que revendiqué selon la revendication 6, **caractérisé par** la fabrication du corps de quille (1) par moulage par injection de sorte que ladite pièce de masse (7) est disposée dans un moule (5a, 5b) formant le corps (1) ou une partie (2a, 2b) de celui-ci avant que le plastique ou le mélange comprenant le plastique est injecté dans ledit moule (5a, 5b).

8. Procédé tel que revendiqué selon la revendication 6 ou 7, **caractérisé en ce que** le mélange comprenant du plastique contient de la fibre naturelle, préférablement de la fibre de bois, plus préférablement de la fibre de bois dur.

9. Procédé tel que revendiqué selon l'une quelconque des revendications 1 à 5, **caractérisé par** la fabrication du corps de quille (1) partiellement ou entièrement à partir de bois.

10. Procédé tel que revendiqué selon l'une quelconque des revendications 4 à 9, **caractérisé par** la fabrication de l'intérieur (4) à une distance de la base (9) de la quille.

11. Procédé tel que revendiqué selon l'une quelconque des revendications 4 à 10, **caractérisé par** la mise en place de tout l'intérieur (4) au-dessous du col (18) de la quille.
